# EUROPEAN PATENT SPECIFICATION

(11) **EP 1 126 101 B1**
(45) Date of publication and mention of the grant of the patent: **21.07.2004**
(21) Application number: 99940603.6
(22) Date of filing: 01.09.1999
(51) Int. Cl.: E04H 9/02, E04B 2/56

(54) **MOUNTING STRUCTURE AND METHOD FOR VISCOSITY SYSTEM DAMPING WALL**
MONTAGESTRUKTUR UND VISKOSITÄTSDÄMPFUNGSSYSTEM
STRUCTURE ET PROCEDE DE MONTAGE D'UNE PAROI D'AMORTISSEMENT A SYSTEME DE VISCOSITE

(43) Date of publication of application: 22.08.2001
(73) Proprietor: SHIMIZU CORPORATION, Tokyo 105-8007 (JP)
(72) Inventor: ISODA, Kazuhiko Shimizu Corporation, Minato-ku, Tokyo 105-8007 (JP)
(74) Representative: Senior, Alan Murray
(86) International application number: PCT/JP1999/004737
(87) International publication number: WO 2001/016445

(56) References cited:
- EP-A- 1 111 162
- EP-A- 1 111 163
- JP-A- 8 338 153
- JP-A- 9 310 531
- JP-A- 10 046 865
- JP-A- 10 220 063
- JP-A- 59 052 069
- PATENT ABSTRACTS OF JAPAN vol. 1999, no. 13, 30 November 1999 (1999-11-30) -& JP 11 217955 A (OILES IND CO LTD), 10 August 1999 (1999-08-10)

## Description

### TECHNICAL FIELD

The present invention relates to a structure for installing a viscous vibration-damping wall and a method of installing the same, and more particularly to a structure for installing a viscous vibration-damping wall whose connecting structure is simple and which, while possessing a sufficient withstanding force, can be manufactured at low cost by making improvements on the structure for installing the viscous vibration-damping wall on a main frame structure, as well as a method of installing the same.

### BACKGROUND ART

Measures for enhancing the damping performance of structures have been adopted since ancient times to enhance the safety of earthquake resistance of building structures and improve the dwelling ability of structures against the wind and other dynamic external forces. As specific solutions therefor, viscous vibration-damping walls have been put to practical use, and the number of the viscous vibration-damping walls actually adopted has been on an increasing trend in recent years.

The viscous vibration-damping wall is constructed such that an upper-end open housing, which is formed by a pair of steel-made side plates mounted on a base plate and a pair of flange plates disposed on both sides of the pair of side plates, is integrated with a lower-floor girder, an intermediate plate integrated with an upper-floor girder is inserted in it, and a viscous material or a viscoelastic material is placed in the gap therebetween with a predetermined thickness.

To build the vibration-damping wall, connection to a main frame structure is required, but under the present circumstances connection metal plates from the main frame structure for connection to the viscous vibration-damping wall include a large number rib plates and make the joints complex, constituting a factor for higher cost.

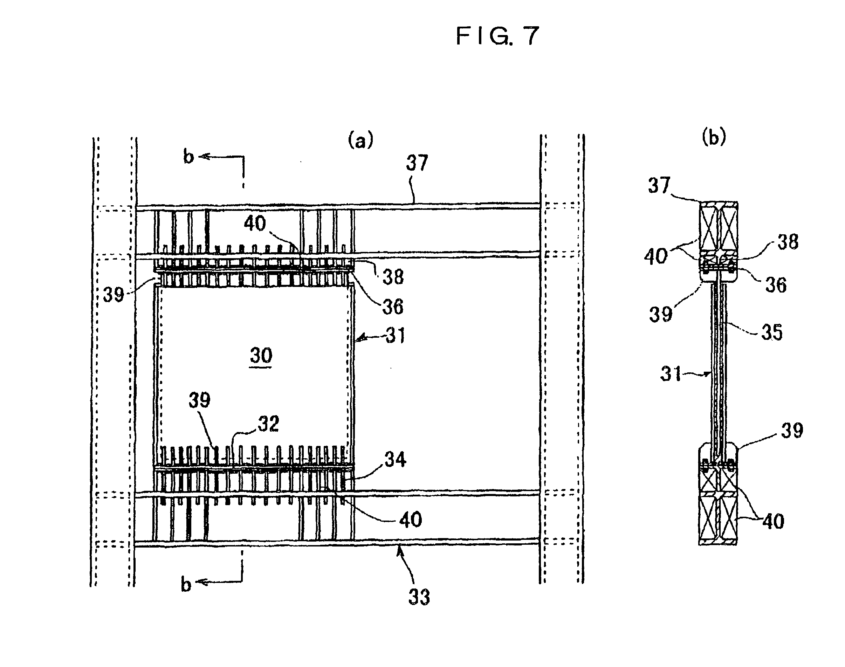

Referring to Fig. 7, a description will be given of the connection between a conventional viscous vibration-damping wall and the main frame structure. A base plate 32 of a housing 31 making up a vibration-damping wall 30 is bolted to a flange surface of a rising metal plate 34 disposed on a lower-floor girder 33, while an intermediate plate 35 of the vibration-damping wall has a top plate 36 welded to its tip portion and is bolted to a flange surface of a mounting plate 38 disposed on an upper-floor girder 37.

In this state, when the vibration-damping wall 30 bears a horizontal force due to an external force, bending moment due to the borne shearing force occurs in the top plate 36 and the base plate 32 at the upper and lower ends.

The stress applied to the joints acts as the horizontal shearing force with respect to the bolts at the plane of connection, and at the same time a vertical axial force which is distributed widely at the edge portions of the vibration-damping wall 30 occurs in the bolts at the plane of connection due to the bending moment. As a result, large bending stresses occur in the top plate 36 and the base plate 32 having bolt hole portions arranged horizontally, so that it is necessary to adopt countermeasures for the respective plates.

Consequently, as shown in the drawing, a multiplicity of vertical rib plates 39 and 40 are fixed to the base plate 32 and the top plate 36 as well as the rising metal plate 34 and the mounting plate 38 corresponding thereto, and large-scale reinforcement is provided particularly at the edge portions of the vibration-damping wall. This results in an enormously large increase in cost, and constitutes a hindrance to the connection to a member perpendicular to a girder, and to through holes of sleeves of the facility.

Since the damping performance which can be added to a structure is proportional to the quantity of vibration-damping walls that are installed, it is desirable to adopt a large number of vibration-damping walls. However, since the cost required in the installation is also proportional to the quantity used, it is an important problem to reduce the cost of the building construction of the vibration-damping walls and to prevent adverse effects from being exerted on other execution of works.

To overcome this problem, a method of building construction has been proposed in which all the upper and lower flange portions are removed. (Refer to JP-A-10-46865)

In this proposal, as shown in the drawing, a bolting steel plate 52 is provided which has the same thickness as an inner wall steel plate 51 of a vibration-damping wall 50 to be fixed to the underside of an upper-floor girder or a reinforced portion thereof, and the inner wall steel plate 51 of the vibration-damping wall is disposed immediately therebelow. A pair of bolting reinforcing plates 53 are disposed on both sides of the inner wall steel plate 51, and the three steel plates are tightened by high-strength bolts 54 so as to be integrated.

In addition, on a lower floor side, a bolting lower steel plate 56 is welded in advance to lower sides of a pair of outer wall steel plates 55 of the vibration-damping wall, and a steel plate 57 of the same thickness as the bolting lower steel plate 56 is provided on a lower-floor girder, and is integrated therewith in the same way as the upper side.

An assertion is made that it is possible to substantially reduce the cost required for the overall building construction of the vibration-damping wall, since the mechanism for transmitting the stress can be rationalized and the fabrication of the vibration-damping wall itself and the fixing portions can be both simplified by virtue of the construction in which flanged connection in each of the upper and lower portions is eliminated, as described above.

However, with the vibration-damping wall according to this proposal, the vibration-damping wall itself is specially provided with the bolting lower steel plate, the inner wall steel plate is provided with an upper reinforced portion, and the friction-type high-strength bolted connection for jointing adopts a structure in which a multiplicity of bolts are arranged on end portion sides of the vibration-damping wall. Such a construction is a natural consequence of the fact that the bolting lower steel plate and the inner wall steel plate need to simultaneously withstand both the shearing force and the tensile force with respect to the bending moment occurring in the vibration-damping wall. A substantial thickness must be inevitably secured for the bolting lower steel plate, so that the cost of the vibration-damping wall itself is not much different from other conventional vibration-damping walls.

In addition, concerning the handling of the vibration-damping wall, since the structure adopted is such that the vibration-damping wall cannot be self-supported, special attention is required for safety and workability under the circumstances of transportation, storage, and on-site setting.

The present invention provides a structure for installing a viscous vibration-damping wall which is simple while possessing a sufficient withstanding force, and which can be manufactured at low cost by making improvements on the structure for connection at the time of installing the viscous vibration-damping wall on a main frame structure, as well as a method of installing the same.

JP-A-11217955 is the basis for the pre-characterising part of claim 1. Attention is also directed to WO-A-0014362 and WO-A-0012843, which are considered as comprised in the state of the art under the provisions of Article 54(3) EPC, and to JP-A-10220063.

According to the present invention there is provided a structure for installing a viscous vibration-damping wall and including said viscous vibration-damping wall according to claim 1.

By virtue of the above-described structure, the top plate, the brackets, and the reinforcing rib plates at various portions which have been used in the building construction of the vibration-damping wall are made substantially unnecessary, the reduction of the thickness of the base plate and the number of bolts is attained, and the vibration-damping wall can be self-supported, so that the safety of construction work and workability are improved.

The invention also provides a method of installation applied to such a structure comprising the steps of:
setting said lower-floor girder comprising said base-plate connecting hole portions and said flange connecting plates;
setting at a predetermined position said upper-floor girder with which said viscous vibration-damping wall is integrated by connecting said intermediate plate to said gusset plate provided on said upper-floor girder and by connecting said housing to said upper-floor girder by means of a pair of temporary suspending pieces;
subjecting said base plate and said flange plates to friction-type high-strength bolted connection to said base-plate connecting hole portions and said flange connecting plates, respectively, of said lower-floor girder; and
removing said temporary suspending pieces.

Accordingly, with the invention, handling is simple, shear deformation of the viscous material can be prevented, and the movability of the vibration-damping wall is prevented.

Advantages of the invention are that the top plate, the brackets, and the reinforcing rib plates at various portions which have been used in the building construction of the vibration-damping wall are made unnecessary, and the reduction of the thickness of the base plate and the number of bolts is attained, thereby making it possible to reduce the cost. Further, since the vibration-damping wall can be self-supported, an advantage can be demonstrated in that the safety of construction work and workability can be improved.

In addition, advantages of the method are that handling can be made simple, shear deformation of the viscous material can be prevented, and the movability of the vibration-damping wall can be prevented.

Hereafter, a description will be given of the embodiments of the present invention with reference to the drawings.

### BRIEF DESCRIPTION OF DRAWINGS

Fig. 1 is a diagram of a state in which a viscous vibration-damping wall in accordance with the invention is installed on a main frame structure;
Fig. 2 is a perspective view of the viscous vibration-damping wall in accordance with the invention;
Fig. 3 is a diagram of a state in which the viscous vibration-damping wall is fixed to an upper-floor girder;
Fig. 4 is a diagram of another state in which the viscous vibration-damping wall is fixed to the upper-floor girder;
Fig. 5 is an exploded view of installation of the viscous vibration-damping wall in accordance with the invention;
Fig. 6 is a diagram of a state of installation in which a plurality of viscous vibration-damping walls are installed in a juxtaposed manner on the main frame structure in accordance with the invention;
Fig. 7 is a diagram of a state of the conventional installation of a viscous vibration-damping wall; and

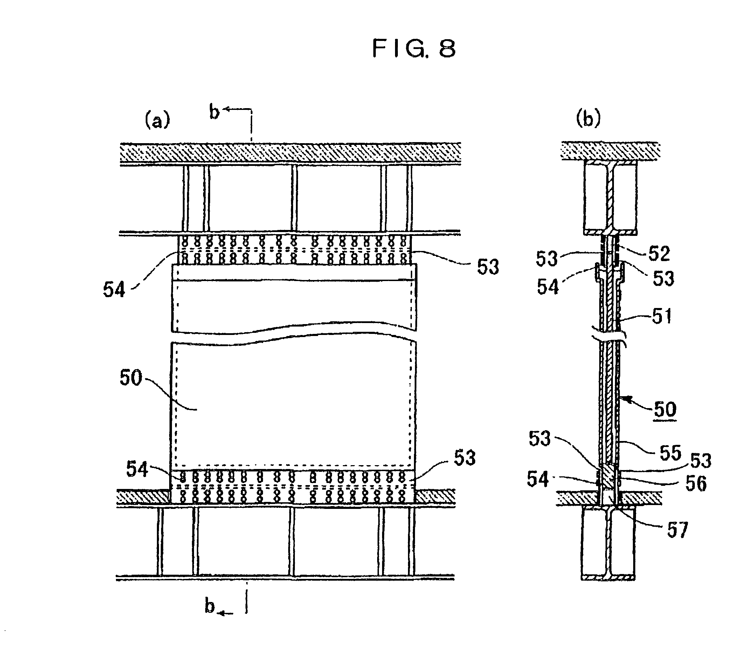

Fig. 8 is a diagram of another state of the conventional installation of a viscous vibration-damping wall.

### EMBODIMENTS

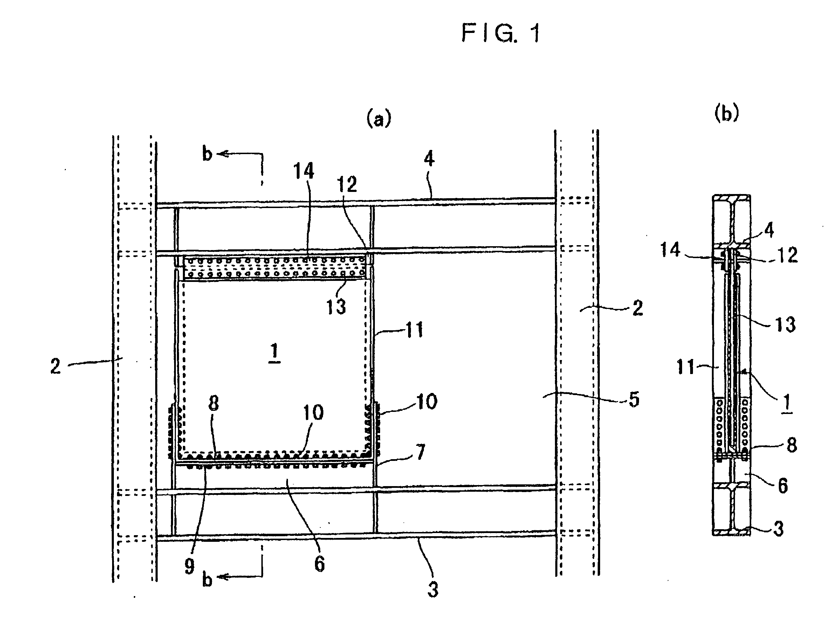

Fig. 1 is an elevational view and a cross-sectional view, taken in the direction of arrows, of a state in which a viscous vibration-damping wall in accordance with the invention is installed on a main frame structure.

A viscous vibration-damping wall 1 is disposed in a plane of structure 5 which is formed by a pair of pillars 2, a lower-floor girder 3, and an upper-floor girder 4, and is joined to the lower-floor girder 3 and the upper-floor girder 4, respectively.

Although the viscous vibration-damping wall 1 may be mounted directly on the lower-floor girder 3 having base-plate connecting hole portions and a pair of flange connecting plates, in this embodiment a description will be given of a viscous vibration-damping wall which is provided with a rising metal plate for reasons which will be described later.

A pair of flange connecting plates 7 are welded to a rising metal plate 6 welded to a flange surface of the lower-floor girder 3, and is thus integrated with the lower-floor girder 3. The rising metal plate 6 is adopted to set the working plane for the friction-type high-strength bolted connection of the viscous vibration-damping wall 1 on a floor slab without damaging the base metal of the lower-floor girder 3 by bolt holes and the like. The adoption of the rising metal plate 6 has an advantage in that when the need has arisen to replace the viscous vibration-damping wall 1, the replacement work is facilitated.

The interval between the pair of flange connecting plates 7 is set to be slightly larger than the external width of the viscous vibration-damping wall 1, and an arrangement is provided such that the gap can be adjusted at the time of installation at the site.

The viscous vibration-damping wall 1 is placed on the rising metal plate 6, and a base plate 8 of the viscous vibration-damping wall and base-plate connecting hole portions 9 of the rising metal plate 6 are frictionally connected in one plane by high-strength bolts 10. Similarly, a flange plate 11 on each side of the viscous vibration-damping wall and the flange connecting plate 7 are frictionally connected in one plane by the high-strength bolts 10, thereby integrally joining the viscous vibration-damping wall 1 and the lower-floor girder 3.

The flange connecting plates 7 process as the shearing force of the high-strength bolts the bending moment occurring due to the shearing force which is borne by the viscous vibration-damping wall 1 during an earthquake, by making use of the fact that the bending moment is converted to vertical force at the portions of the flange plates 11 disposed on both sides of the viscous vibration-damping wall, thereby suppressing and damping the lifting force of the base plate and the vertical force occurring substantially in edge portions of the viscous vibration-damping wall.

Accordingly, the base plate 8 of the viscous vibration-damping wall 1 and the base-plate connecting hole portions 9 of the rising metal plate 6 are of the base plate type in the same way as the conventional art. However, since a tensile force does not occur in the connection bolts unlike the conventional viscous vibration-damping wall, reinforcing rib plates are not required, and a simple state of connection with small thickness is thus formed.

A gusset plate 12 is attached by welding to a lower flange surface of the upper-floor girder 4 in alignment with the web of the girder.

An intermediate plate 13 of the viscous vibration-damping wall 1 together with the gusset plate 12 is clamped by two splicing plates 14 in order to be directly connected to the gusset plate 12, and the intermediate plate 13 and the gusset plate 12 are directly connected to each other by being frictionally connected in two planes by the high-strength bolts 10. The viscous vibration-damping wall 1 and the upper-floor girder 4 are thus integrally joined by these members.

In the direct connection between the intermediate plate 13 and the gusset plate 12, since a top plate provided on a conventional intermediate plate and a bracket suspended from the upper-floor girder are eliminated, the height of the viscous vibration-damping wall can be made large, and the shear area of the viscous vibration-damping material is increased, thereby making it possible to improve the damping performance.

It should be noted that a pair of flange plates having screw holes for attaching a pair of temporary suspending pieces, which will be described later, are respectively provided at both ends of the gusset plate 12 in a direction perpendicular to the web of the upper-floor girder.

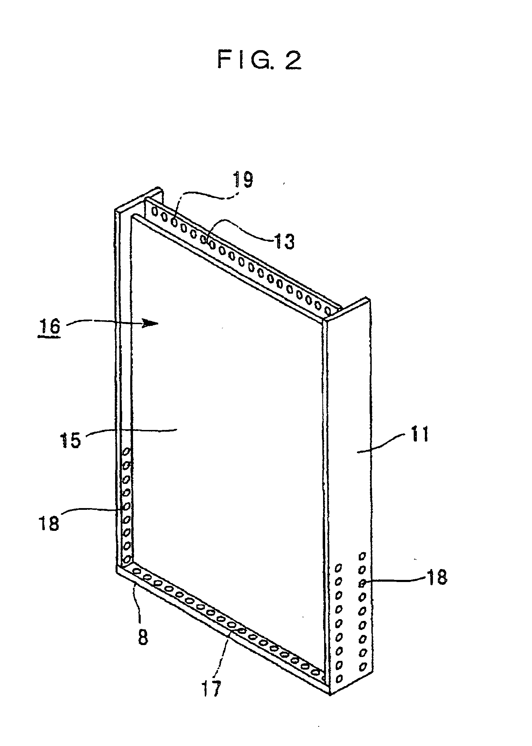

Fig. 2 is a perspective view of the viscous vibration-damping wall.

In the viscous vibration-damping wall 1, as shown in the drawing, a housing 16 with its upper end open is formed by uprightly setting a pair of steel-made side plates 15 on the base plate 8 and by disposing the pair of flange plates 11 on both sides of the pair of side plates 15, and the intermediate plate 13 is inserted in the housing 16. A viscous material or a viscoelastic material is placed in the gap between the housing 16 and each side of the intermediate plate 13, and the arrangement provided is such that a horizontal force applied from the outside is dampened between the base plate 8 and the intermediate plate 13.

The base plate method enhances the safety of construction work and facilitates site work since the viscous vibration-damping walls can be self-supported stably during their transportation, storage, and on-site setting.

Although the base plate 8 in its outward appearance appears to be the same as the conventional viscous vibration-damping wall, since it is unnecessary to withstand the vertical force, as described above, it is unnecessary to provide the reinforcing rib plates, so that a simple shape with small thickness can be obtained.

The base plate 8 and the flange plates 11 are respectively provided with bolt holes 17 and 18 for the high-strength bolts for effecting one-plane friction-type connection to the base-plate connecting hole portions and the flange connecting plates which are respectively provided on the rising metal plate. Provided in a tip portion of the intermediate plate 13 are bolt holes 19 for the high-strength bolts for effecting two-plane friction-type connection to the splicing plates 14 at the time of directly connecting the intermediate plate 13 to the gusset plate 12.

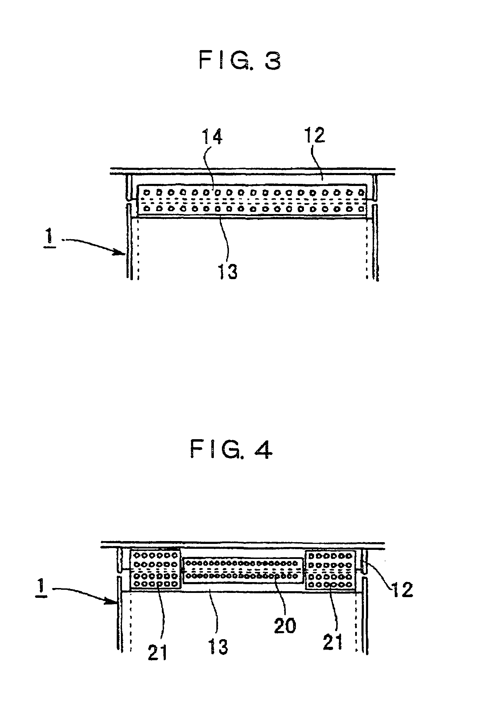

Fig. 3 shows an embodiment of connecting the intermediate plate and the gusset plate.

In this embodiment, the gusset plate 12 and the intermediate plate 13 are directly connected. Namely, the gusset plate 12 and the intermediate plate 13 are clamped by the two splicing plates 14, and are connected by being subjected to two-plane friction-type connection by the high-strength bolts 10 arranged in parallel in the splicing plates 14. The viscous vibration-damping wall 1 and the upper-floor girder 4 are thereby integrally connected.

In the direct connection of the gusset plate 12 and the intermediate plate 13, the splicing plates are not necessarily required, and if the welding position of the gusset plate is offset in advance from the center of the web of the upper-floor girder such that the center of the web of the upper-floor girder and the center of the intermediate plate are aligned with each other, the direct connection of the gusset plate 12 and the intermediate plate 13 can be also effected by directly connecting them by one-plane friction-type connection using the high-strength bolts.

The adoption of this one-plane friction-type connection contributes to the reduction of the cost since the splicing plates are disused.

Fig. 4 shows another embodiment of connecting the intermediate plate and the gusset plate.

In this embodiment, although there is no specific change in the intermediate plate, a difference lies in that each splicing plate is divided into a central portion 20 and a pair of leg portions 21. The bolt holes are arranged in a single row on each of upper and lower sides of the central portion 20 of the splicing plate, while two rows of bolt holes each on upper and lower sides are arranged on the side splicing plates 21 so as to cope with the allotted shear stresses.

The division of the splicing plate is not only rational in the allotment of the stress, but has an advantage of being able to flexibly cope with the unevenness between the gusset plate and the intermediate plate caused by the erection accuracy at the site. Further, since the weight per location can be reduced, this arrangement exhibits the advantage of allowing the operation to be performed sufficiently by the human strength of operators without using special heavy machinery or equipment.

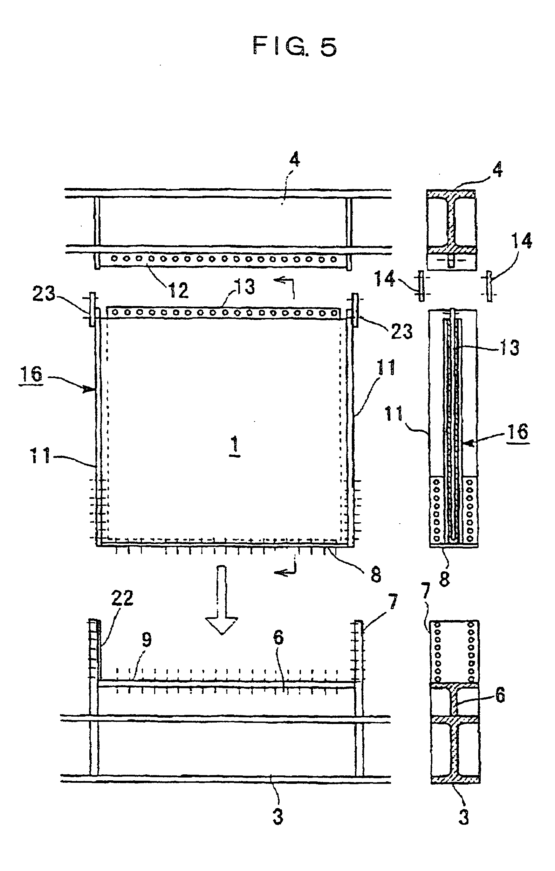

Fig. 5 is an exploded view for explaining a method of installing a viscous vibration-damping wall in accordance with the invention.

The installing operation begins with the fixation to unillustrated pillars of the lower-floor girder 3 with the rising metal plate 6 integrated thereto by welding. At this juncture, a filler plate 22 for adjusting a gap is attached in advance to the flange connecting plate 7 at each end of the rising metal plate 6.

Meanwhile, the housing 16 of the viscous vibration-damping wall 1 is fixed to the upper-floor girder 4 by means of a pair of temporary suspending pieces 23. At the same time, the gusset plate 12 and the intermediate plate 13 are subjected to two-plane friction-type connection by the high-strength bolts by using the pair of splicing plates 14 so as to be directly connected to each other.

It should be noted that the direct connection based on the one-plane friction-type high-strength connection without using the splicing plates is the same as described before.

The upper-floor girder 4 integrated with the viscous vibration-damping wall 1 is suspended and set at a predetermined position, and the use of the temporary suspending pieces 23 makes it possible to prevent the viscous material from undergoing shear deformation by the weight of the viscous vibration-damping wall, fix the viscous vibration-damping wall immovably, and suppress its rotation about the axis of the girder during hanging.

Hanging is effected to install the viscous vibration-damping wall 1 between the pair of flange connecting plates 7. At this juncture, adjustment of the gap and the like is made by inserting or removing the filler plate 22 attached in advance, so that the viscous vibration-damping wall will be accommodated between the flange connecting plates without strains.

Upon completion of positioning, one-plane friction-type high-strength bolted connection is effected between the base plate 8 and the base-plate connecting hole portions 9 and between the flange plate 11 and the flange connecting plate 7, thereby completing the installation of the viscous vibration-damping wall 1 on the main frame structure.

At this stage, the aforementioned temporary suspending pieces 23 are removed, which makes it possible for the viscous vibration-damping wall 1 to assume a movable state whereby it is capable of demonstrating its intrinsic vibration-damping function, and the installation work is thereby completed.

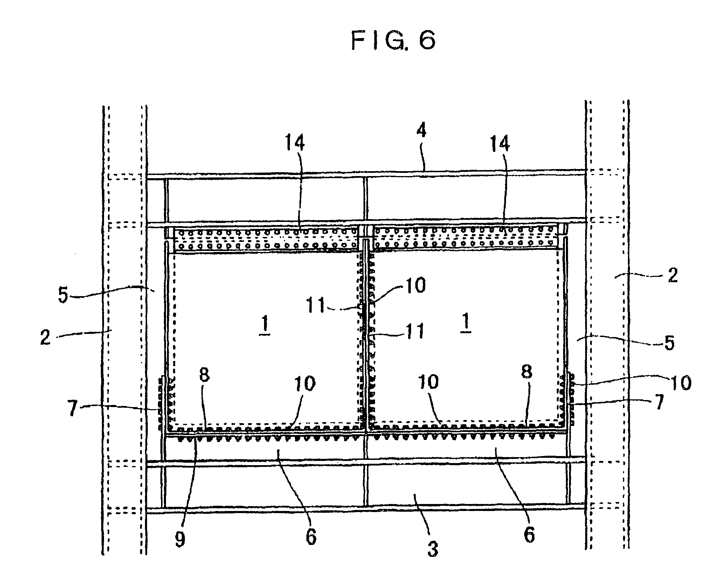

Fig. 6 is an elevational view of a state in which the viscous vibration-damping walls in accordance with the invention are installed in a juxtaposed manner.

A pair of viscous vibration-damping walls 1 are installed in a juxtaposed manner in the plane of structure 5 which is formed by the pair of pillars 2, the lower-floor girder 3, and the upper-floor girder 4, and is joined integrally to the lower-floor girder 3 and the upper-floor girder 4.

The rising metal plate 6 welded to the flange surface of the lower-floor girder 3 has a length allowing two viscous vibration-damping walls 1 to be placed thereon, and is integrated with the lower-floor girder 3, the pair of flange connecting plates 7 being respectively attached to both sides of the rising metal plate 6 in the same way as the embodiment shown in Fig. 1.

The viscous vibration-damping walls 1 at their mutually opposing flange plates 11 on their one sides are frictionally connected in one plane by the high-strength bolts 10, and this assembly in the integrated state is placed on the rising metal plate 6.

The viscous vibration-damping walls 1 are integrally connected to the lower-floor girder 3 as each base plate 8 and the base-plate connecting hole portions 9 of the rising metal plate 6 are frictionally connected in one plane by the high-strength bolts 10, and the flange plate 11 located on each side of the assembly of the viscous vibration-damping walls and each flange connecting plate 7 are frictionally connected in one plane by the high-strength bolts 10.

The flange connecting plates 7 process the lifting force of the base plates and the vertical force occurring in edge portions of the viscous vibration-damping walls by receiving as the shearing force of the high-strength bolts the bending moment due to the shearing force which is borne by the integrally connected viscous vibration-damping walls 1 during an earthquake.

Two gusset plates are attached to the lower flange surface of the upper-floor girder 4 in alignment with the web of the girder in the same way as the above-described embodiment.

The intermediate plate of each viscous vibration-damping wall 1 and the gusset plate are clamped by the two splicing plates 14, and are frictionally connected to each other in two planes by the high-strength bolts, thereby allowing the viscous vibration-damping walls 1 and the upper-floor girder 4 to be integrally connected.

As described above, the structure for installing a viscous vibration-damping wall in accordance with the invention is not limited to the installation of a single viscous vibration-damping wall, and is also applicable to the case where a plurality of viscous vibration-damping walls are installed in a juxtaposed manner. Regardless of the number of the viscous vibration-damping walls to be juxtaposed, by subjecting the flange plates on their mutually opposing sides to one-plane friction-type high-strength bolted connection, the entire unit can be handled as one viscous vibration-damping wall. In the fixation of the viscous vibration-damping walls to the upper-floor girder, the integration with the upper-floor girder can be ensured by merely attaching the temporary suspending pieces to the outer flange plates.

## Claims

1. A structure for installing a viscous vibration-damping wall (1) comprising a lower-floor girder (3) and an upper-floor girder (4) and including said viscous vibration-damping wall (1), in which the viscous vibration-damping wall (1) comprises a housing (16) with an upper end open, an intermediate plate (13) which is inserted in said housing (16), and a viscous material or a viscoelastic material which is placed in a gap portion between the housing (16) and the intermediate plate (13), said housing (16) including a base plate (8), a pair of steel-made side plates (15) uprightly set on the base plate (8), a pair of flange plates (11) disposed on both sides of said pair of side plates (15) and base plate connecting hole portions (9), said base plate (8) being connected to said base-plate connecting hole portions (9), **characterised in that** the structure further comprises a pair of flange connecting plates (7), a gusset plate (12) and a filler plate (22), **in that** each of said flange plates (11) are connected to each of said pair of flange connecting plates (7), said flange connecting plates (7) being provided on a flange of said lower-floor girder (3), **in that** said intermediate plate (13) is connected to said gusset plate (12), said gusset plate (12) being attached to a flange of said upper-floor girder (4) by one-plane friction-type high-strength bolted connection or two-plane friction-type high-strength bolted connection, and **in that** said filler plate (22) is interposed for each of said flange connecting plates (7).

2. The structure for installing a viscous vibration-damping wall (1) according to claim 1, wherein a rising metal plate (6) is fixed on the flange of said lower-floor girder (3), and said base-plate connecting hole portions (9) and said pair of flange connecting plates (7) are provided on said rising metal plate (6).

3. The structure for installing a viscous vibration-damping wall (1) according to claim 1or 2, wherein said flange plate (11) is connected to said flange connecting plate (7) by one-plane friction-type high-strength bolted connection.

4. The structure for installing a viscous vibration-damping wall (1) according to claim 1, wherein said intermediate plate (13) is connected to said gusset plate (12) by two-plane friction-type high-strength bolted connection using a pair of splicing plates (14).

5. The structure for installing a viscous vibration-damping wall (1) according to claim 4, wherein each of said splicing plates (14) is divided into a central portion and a pair of side portions.

6. A method of installation applied to the structure for installing a viscous vibration-damping wall (1) according to any one of claims 1 to 5, comprising the steps of:
setting said lower-floor girder (3) comprising said base-plate connecting hole portions (9) and said flange connecting plates (7);
setting at a predetermined position said upper-floor girder (4) with which said viscous vibration-damping wall (1) is integrated by connecting said intermediate plate (13) to said gusset plate (12) provided on said upper-floor girder (4) and by connecting said housing (16) to said upper-floor girder (4) by means of a pair of temporary suspending pieces (23);
subjecting said base plate (8) and said flange plates (11) to friction-type high-strength bolted connection to said base-plate connecting hole portions (9) and said flange connecting plates (7), respectively, of said lower-floor girder (3); and
removing said temporary suspending pieces (23).

## Patentansprüche

1. Konstruktion zur Montage einer viskosen Vibrationsdämpfungswand (1), aufweisend einen Untergeschoßträger (3) und einen Obergeschoßträger (4) und enthaltend die viskose Vibrationsdämpfungswand (1), wobei die viskose Vibrationsdämpfungswand (1) ein Gehäuse (16) mit einem offenen oberen Ende, eine Zwischenplatte (13), die in das Gehäuse (16) eingesetzt ist, und ein viskoses Material bzw. ein viskoelastisches Material umfaßt, das in einem Spaltabschnitt zwischen dem Gehäuse (16) und der Zwischenplatte (13) angeordnet ist, wobei das Gehäuse (16) eine Basisplatte (8), ein Paar von aus Stahl bestehenden Seitenplatten (15), die auf der Basisplatte (8) aufrecht angeordnet sind, ein Paar von Flanschabschnitten (11), die zu beiden Seiten des Paares von Seitenplatten (15) angeordnet sind, und Basisplattenverbindungslochabschnitte (9) umfaßt, wobei die Basisplatte (8) mit den Basisplattenverbindungslochabschnitten (9) verbunden ist,
**dadurch gekennzeichnet, daß** die Konstruktion außerdem ein Paar von Flanschverbindungsplatten (7), eine Eckversteifungsplatte (12) und eine Füllplatte (22) umfaßt, daß jede der Flanschplatten (11) mit jeder des Paares von Flanschverbindungsplatten (7) verbunden ist, wobei die Flanschverbindungsplatten (7) auf einem Flansch des Untergeschoßträgers (3) vorgesehen sind, daß die Zwischenplatte (13) mit der Eckversteifungsplatte (12) verbunden ist, wobei die Eckversteifungsplatte (12) an einem Flansch des Obergeschoßträgers (4) durch eine in einer Ebene liegende hochfeste Bolzenverbindung vom Reibungstyp bzw. durch eine in zwei Ebenen liegende hochfeste Bolzenverbindung vom Reibungstyp angebracht ist, und daß die Füllplatte (22) für jede der Flanschverbindungsplatten (7) in Zwischenlage angeordnet ist.

2. Konstruktion zur Montage einer viskosen Vibrationsdämpfungswand (1) nach Anspruch 1, wobei eine hochstehende Metallplatte (6) auf dem Flansch des Untergeschoßträgers (3) fest angebracht ist und wobei die Basisplattenverbindungslochabschnitte (9) und das Paar von Flanschverbindungsplatten (7) auf der hochstehenden Metallplatte,(6) vorgesehen sind.

3. Konstruktion zur Montage einer viskosen Vibrationsdämpfungswand (1) nach Anspruch 1 oder 2, wobei die Flanschplatte (11) mit der Flanschverbindungsplatte (7) durch eine in einer Ebene liegende hochfeste Bolzenverbindung vom Reibungstyp verbunden ist.

4. Konstruktion zur Montage einer viskosen Vibrationsdämpfungswand (1) nach Anspruch 1, wobei die Zwischenplatte (13) mit der Eckversteifungsplatte (12) durch eine in zwei Ebenen liegende hochfeste Bolzenverbindung vom Reibungstyp unter Verwendung eines Paares von Keilplatten (14) verbunden ist.

5. Konstruktion zur Montage einer viskosen Vibrationsdämpfungswand (1) nach Anspruch 4, wobei jede der Keilplatten (14) in einen zentralen Abschnitt und ein Paar von Seitenabschnitten unterteilt ist.

6. Montageverfahren für eine Konstruktion zum Montieren einer viskosen Vibrationsdämpfungswand (1) nach einem der Ansprüche 1 bis 5, aufweisend die Schritte:
Anordnen des Untergeschoßträgers (3) mit den die Basisplattenverbindungslochabschnitten (9) und den Flanschverbindungsrahmeneckplatten (7);
Anordnen des Obergeschoßträgers (4), mit welchem die viskose Vibrationsdämpfungswand integriert ist, in einer vorbestimmten Position, durch Verbinden der Zwischenplatte (13) mit der Eckversteifungsplatte (12), die auf dem Obergeschoßträger (4) vorgesehen ist, und durch Verbinden des Gehäuses (16) mit dem Obergeschoßträger (4) mittels eines Paares von temporären Aufhängungselementen (23);
Unterwerfen der Basisplatte (8) und der Flanschplatten (11) einer hochfesten Bolzenverbindung vom Reibungstyp mit dem Basisplattenverbindungslochabschnitt (9) und den Flanschverbindungsplatten (7) des Untergeschoßträgers (3); und
Entfernen der vorübergehenden Aufhängungselemente (23).

## Revendications

1. Structure servant à installer une paroi d'amortissement de vibrations à viscosité (1) comprenant une poutre d'étage inférieur (3) et une poutre d'étage supérieur (4) et incluant ladite paroi d'amortissement de vibrations à viscosité (1), dans laquelle la paroi d'amortissement de vibrations à viscosité (1) comprend un boîtier (16) à extrémité supérieure ouverte, une plaque intermédiaire (13) qui est insérée dans ledit boîtier (16), et un matériau visqueux ou un matériau viscoélastique qui est placé dans un espace situé entre le boîtier (16) et la plaque intermédiaire (13), ledit boîtier (16) comportant une plaque de base (8), deux plaques latérales en acier (15) placées debout sur la plaque de base (8), une paire de plaques formant bride (11) placées de chaque côté de ladite paire de plaques latérales (15) et des parties à trou de connexion de plaque de base (9), ladite plaque de base (8) étant connectée auxdites parties à trou de connexion de plaque de base (9), **caractérisée en ce que** la structure comprend en outre une paire de plaques de connexion de bride (7), une plaque formant gousset (12) et une plaque formant hourdis (22), **en ce que** chacune desdites plaques formant bride (11) est connectée à chacune des plaques de ladite paire de plaques de connexion de bride (7), lesdites plaques de connexion de bride (7) étant placées sur une bride de ladite poutre d'étage inférieur (3), **en ce que** ladite plaque intermédiaire (13) est connectée à ladite plaque formant gousset (12), ladite plaque formant gousset (12) étant fixée à une bride de ladite poutre d'étage supérieur (4) au moyen d'une connexion boulonnée haute résistance à frottement à un plan ou d'une connexion boulonnée haute résistance à frottement à deux plans, et **en ce que** ladite plaque formant hourdis (22) est intercalée pour chacune desdites plaques de connexion de bride (7).

2. Structure servant à installer une paroi d'amortissement de vibrations à viscosité (1) selon la revendication 1, dans laquelle une plaque métallique d'élévation (6) est fixée sur la bride de ladite poutre d'étage inférieur (3), et lesdites parties à trou de connexion de plaque de base (9) et ladite paire de plaques de connexion de bride (7) sont placées sur ladite plaque métallique d'élévation (6).

3. Structure servant à installer une paroi d'amortissement de vibrations à viscosité (1) selon la revendication 1 ou 2, dans laquelle ladite plaque formant bride (11) est connectée à ladite plaque de connexion de bride (7) au moyen d'une connexion boulonnée haute résistance à frottement à un plan.

4. Structure servant à installer une paroi d'amortissement de vibrations à viscosité (1) selon la revendication 1, dans laquelle ladite plaque intermédiaire (13) est connectée à ladite plaque formant gousset (12) au moyen d'une connexion boulonnée haute résistance à frottement à deux plans utilisant une paire de plaques d'assemblage (14).

5. Structure servant à installer une paroi d'amortissement de vibrations à viscosité (1) selon la revendication 4, dans laquelle chacune desdites plaques d'assemblage (14) est divisée en une partie centrale et une paire de parties latérales.

6. Procédé d'installation appliqué à la structure servant à installer une paroi d'amortissement de vibrations à viscosité (1) selon l'une quelconque des revendications 1 à 5, comprenant les étapes consistant à :
poser ladite poutre d'étage inférieur (3) comprenant lesdites parties à trou de connexion de plaque de base (9) et lesdites plaques de connexion de bride (7) ;
poser en une position prédéterminée ladite poutre d'étage supérieur (4) à laquelle est intégrée ladite paroi d'amortissement de vibrations à viscosité (1) en connectant ladite plaque intermédiaire (13) à ladite plaque formant gousset (12) placée sur ladite poutre d'étage supérieur (4) et en connectant ledit boîtier (16) à ladite poutre d'étage supérieur (4) au moyen d'une paire de pièces de suspension temporaire (23) ;
soumettre ladite plaque de base (8) et lesdites plaques formant bride (11) à une connexion boulonnée haute résistance à frottement auxdites parties à trou de connexion de plaque de base (9) et auxdites plaques de connexion de bride (7), respectivement, de ladite poutre d'étage inférieur (3) ; et
retirer lesdites pièces de suspension temporaire (23).
